**Europäisches Patentamt**

**European Patent Office**

**Office européen des brevets**

(19)

(11) Veröffentlichungsnummer: **0 355 685**
**A2**

(12) ## EUROPÄISCHE PATENTANMELDUNG

(21) Anmeldenummer: **89115084.9**

(22) Anmeldetag: **16.08.89**

(51) Int. Cl.⁴: **C08J 3/03 , C08F 6/24 ,**
**B01D 19/04**

(30) Priorität: **18.08.88 DE 3828031**

(43) Veröffentlichungstag der Anmeldung:
**28.02.90 Patentblatt 90/09**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Loebl, Manfred, Dr.**
**Am Stadtwald 32**
**D-8581 Goldkronach(DE)**
Erfinder: **Schul, Wolfgang, Dr.**
**Prager Strasse 33**
**D-6700 Ludwigshafen(DE)**
Erfinder: **Ley, Gregor, Dr.**
**In den Trankstuecken**
**D-6719 Wattenheim(DE)**

(54) **Cyclodextrine als Schaumdämpfer in Polymer-Dispersionen.**

(57) Die Erfindung betrifft emulgatorhaltige wäßrige Polymer-Dispersionen, die schaumdämpfende Zusätze enthalten. Charakteristikum ist, daß sie als schaumdämpfende Zusätze Cyclodextrine enthalten.

EP 0 355 685 A2

## Cyclodextrine als Schaumdämpfer in Polymer-Dispersionen

Bei der Herstellung von wäßrigen Polymer-Dispersionen durch Emulsionspolymerisation der Monomeren werden im allgemeinen etwa 1 bis 5 Gew.%, bezogen auf die Monomeren, an Emulgatoren mitverwendet, um die Monomerenteilchen und die sich daraus bildenden Polymer-Teilchen im wäßrigen Medium stabil zu verteilen. Nach Abschluß der Emulsionspolymerisation sind die Emulgatormoleküle großen Teils an die Polymerteilchen angelagert. In manchen Fällen wird auch den erhaltenen wäßrigen Polymer-Dispersionen zur weiteren Stabilisierung weiterer Emulgator zugesetzt.

Als Emulgatoren werden dabei oberflächenaktive ionische und/oder nichtionische Stoffe eingesetzt.

Beispiele hierfür sind vor allem anionische Emulgatoren von der Art der Alkalisalze von Fettsäuren, wie Natriumlaurat, Natriumstearat und Natriumoleat, Schwefelsäureester von Fettalkoholen, wie Laurylsulfat, Sulfierungsprodukte von oxalkylierten, insbesondere von oxethylierten, meist 8 bis 12 C-Atome im Alkylrest enthaltenden Alkylphenolen, wie besonders p-n-Nonyl- und p-n-Dodecylphenol sowie p-Isooctylphenol und sulfonierte und alkylierte Diphenylether, ferner Sulfobernsteinsäureester-Salze und Salze von Sulfonsäuren von Alkylbenzolen.

Geeignete kationische Emulgatoren sind beispielsweise quarternierte langkettige tert. Amine.

Als nichtionische Emulgatoren kommen vor allem oxalkylierte, vorzugsweise oxethylierte Fettalkohole, Fettamine, Fettsäureamide und/oder meist 8 bis 12 C-Atome in den Alkylgruppen enthaltende Monoalkylphenole, die 5 bis 30, insbesondere 10 bis 25 Ethylenoxid-Einheiten im Molekül enthalten, in Frage, z.B. oxethylierter Laurylalkohol, oxethylierter Oleylalkohol, oxethylierter Spermölalkohol und oxethylierter Stearylalkohol, oxethyliertes Stearinsäureamid, oxethyliertes Oleylamid, oxethylierte Ölsäure, oxethyliertes p-n-Nonylphenol, oxethyliertes p-Isooctylphenol und oxethyliertes p-n-Dodecylphenol und entsprechende Ethylenoxid-Propylenoxid-Adukte.

Wegen ihres Gehalts an derartigen Emulgatoren neigen die wäßrigen Polymer-Dispersionen im allgemeinen mehr oder weniger stark zum Schäumen, was bei ihrer Herstellung, ihrem Transport und ihrer Verarbeitung stört. Man setzt daher derartigen wäßrigen Polymer-Dispersionen häufig Entschäumer zu, wobei es sich meist um komplizierte Zubereitungen aus bestimmten grenzflächenaktiven Verbindungen, z.B. langkettigen Alkoholen, mit öligen Substanzen, z.B. Silikonölen, und feinstverteilten Feststoffen z.B. auf der Basis von feinteiligem Siliciumdioxid, handelt. Dosierung, Einarbeitung unter Verteilung des Zusatzes derartiger bekannter Entschäumer zu wäßrigen Polymer-Dispersionen oder zu aus ihnen hergestellten Anstrichfarben sind jedoch kritisch, da Überdosierung oder inhomogene Verteilung zu Oberflächenstörungen bei daraus hergestellten Filmen und Beschichtungen führen, andererseits aber auch bei einer längeren Lagerung derartiger Gemische eine deutliche Abnahme der Wirksamkeit der Entschäumungsmittel eintreten kann. Hersteller und Anwender von wäßrigen Polymer-Dispersionen sind daher an Entschäumern interessiert, die Nachteile dieser Art nicht aufweisen.

Es wurde nun gefunden, daß man als schaumdämpfende Zusätze zu emulgatorhaltigen wäßrigen Polymer-Dispersionen mit Vorteil Cyclodextrine verwenden kann.

Cyclodextrine sind bekanntlich cyclische Abbauprodukte von Stärken, die 6, 7 oder 8 Glycopyranose-Einheiten aufweisen. Dabei weisen die $\alpha$-Cyclodextrine 6 Glycopyranose-Einheiten, die $\beta$-Cyclodextrine 7 Glycopyranose-Einheiten und die $\gamma$-Cyclodextrine 8 Glycopyranose-Einheiten je Molekül auf.

Derartige Cyclodextrine bewirken, wenn sie emulgatorhaltigen wäßrigen Polymer-Dispersionen zugesetzt werden, überraschenderweise eine starke Verminderung von deren Schaumneigung ohne jedoch die Stabilität der Dispersionen zu vermindern oder ihre Lagerfähigkeit zu beeinträchtigen. Von den Cyclodextrinen der genannten Art, wird das $\beta$-Cyclodextrin vorgezogen.

Zur Verminderung der Schaumneigung von wäßrigen Polymer-Dispersionen können die Cyclodextrine schon während der Herstellung der Polymer-Dispersionen durch Emulsions-Polymerisation, ggf. nach Abschluß der Emulsions-Polymerisation oder vor dem Versand der Polymer-Dispersionen, ggf. auch bei der Anwendung der Polymer-Dispersionen z.B. bei der Formulierung von Farben oder Klebstoffen zugesetzt werden. Dabei fügt man meist konzentrierte wäßrige Lösungen der Cyclodextrine zu, doch kann es in manchen Fällen auch von Vorteil sein, die Cyclodextrine in fester Form zuzugeben.

Die Menge an Cyclodextrinen, die als entschäumender Zusatz eingesetzt wird, kann in weitem Bereich variiert werden. In manchen Fällen können schon mit Mengen von 0,5 bis 1 Gew.% an Cyclodextrin, bezogen auf die Menge des Polymeren in der wäßrigen Polymer-Dispersion, eine deutliche Verminderung der Schaumneigung festgestellt werden. In manchen Fällen sind auch Mengen von 3 bis zu 20 Gew.%, bezogen auf die dispergierte Polymeren-Menge erforderlich; im allgemeinen nimmt man 1 bis 10 Gew.%. Vor allem, wenn eine verhältnismäßig große Menge Cyclodextrin eingesetzt wird, erhält man Dispersionen, die Filme ergeben, die eine verminderte Neigung zum Blokken aufweisen.

Ein Zusatz an Cyclodextrinen bewirkt bei praktisch allen wäßrigen, emulgatorhaltigen Polymer-Dispersionen eine Verminderung der Schaumneigung, wobei die Art der Monomeren, aus denen die dispergierten Polymerisate aufgebaut sind, praktisch keine Rolle spielt. Die erfindungsgemäßen Zusätze kommen also z.B. für emulgatorhaltige wäßrige Dispersionen von Homopolymerisaten oder Copolymerisaten aus mono- und/oder diolefonisch ungesättigten Monomeren von der Art der monoolefinisch ungesättigten Carbonsäureester, z.B. Vinylacetat, Vinylpropionat, Methylmethacrylat, Methylacrylat, Ethylacrylat und -methacrylat, n-Butylacrylat und -methacrylat, Isobutylacrylat und -methacrylat, 2-Ethylhexylacrylat und -methacrylat, von vinylaromatischen Monomeren, wie Styrol und α-Methylstyrol, von Vinylhalogeniden, wie Vinylchlorid und Vinylidenchlorid, des Ethylens sowie auch des Butadiens und auch von Sekundär-Dispersionen aus Vinylethern in Frage, die anionische, nichtionische oder kationische Emulgatoren der oben genannten Art in den üblichen Mengen enthalten, und die üblichen Konzentrationen im Bereich von 30 bis 70, insbesondere von 50 bis 65 Gew.% Polmyeres, bezogen auf die Dispersion, aufweisen. Die Copolymeren können auch geringe Mengen Acryl- und/oder Methacrylsäure und/oder Acrylamid und/oder Methacrylamid einpolymerisiert enthalten. Emulgatorhaltige wäßrige Dispersionen auf Polyurethanbasis oder auf Basis von Polyestern, wie Polyethylenglykolterephthalat, oder auf Basis von Polyamiden können mit Cyclodextrinen ebenfalls entschäumt werden.

Beispiel 1

Ausgangsmaterial ist eine 60 gew.%ige wäßrige Copolymerisat-Dispersion, deren Copolymerisat zusammengesetzt ist aus 65 Gew.% Ethylacrylat, 31, 5 Gew.% Styrol sowie 3, 5 Gew.% Acrylsäure, und deren Emulgator aus 1, 2 Gew.% (bezogen auf die Dispersion) Natriumlaurylsulfat besteht.

Das Schaumverhalten dieser Dispersion ist in erheblichem Maße unbefriedigend.

Bringt man 2 Gew.% (bezogen auf das Copolymerisat) β-Cyclodextrin homogen in die oben bezeichnete Dispersion ein, so verbessert sich ihr Schaumverhalten drastisch.

Beispiel 2

Ausgangsmaterial ist eine 50 gew.%ige Copolymerisat-Dispersion, deren Copolymerisat zusammengesetzt ist aus 48 Gew.% n-Butylacrylat, 49 Gew.% Styrol sowie 3 Gew.% Acrylsäure, und deren Emulgator aus 1, 8 Gew.% (bezogen auf die Dispersion) des Natriumsalzes des Schwefelsäurehalbesters des Polyoxaalkanols der Formel HO-$(CH_2$-$CH_2O)_{24}$-$CH_2$-$CH_2$-OH besteht.

Das Schaumverhalten dieser Dispersion ist ebenfalls in erheblichem Maße unbefriedigend.

Bringt man 5 Gew.% (bezogen auf das Copolymerisat) β-Cyclodextrin homogen in die oben bezeichnete Dispersion ein, so verbessert sich ihr Schaumverhalten wiederum in erheblichem Maße.

## Ansprüche

1. Emulgatorhaltige wäßrige Polymer-Dispersionen, die schaumdämpfende Zusätze enthalten, dadurch gekennzeichnet, daß sie als schaumdämpfende Zusätze Cyclodextrine enthalten.

2. Polymer-Dispersionen nach Anspruch 1, dadurch gekennzeichnet, daß sie als schaumdämpfenden Zusatz β-Cyclodextrin enthalten.